# FASCICULE DE BREVET EUROPEEN

(11) **EP 3 335 784 B1**
(45) Date de publication et mention de la délivrance du brevet: **07.08.2019**
(21) Numéro de dépôt: 17206290.3
(22) Date de dépôt: 08.12.2017
(51) Int. Cl.: B01J 8/12

(54) **LIT MOBILE POUR REFORMAGE CATALYTIQUE**
FLIESSBETT FÜR KATALYTISCHE REFORMIERUNG
MOVING BED FOR CATALYTIC REFORMING

(30) Priorité: 16.12.2016 FR 1662637
(43) Date de publication de la demande: 20.06.2018
(73) Titulaire: IFP Energies nouvelles, 92852 Rueil-Malmaison Cedex (FR)
(72) Inventeur: RICHARD, Florence, 92380 GARCHES (FR); LAMBERT, Fabian, 78400 CHATOU (FR); BANCEL, Thierry, 43330 PONT SALOMON (FR); FLOER, Cécile, 92500 RUEIL-MALMAISON (FR); VINAY, Guillaume, 92500 RUEIL-MALMAISON (FR)
(74) Mandataire: IFP Energies nouvelles

(56) Documents cités:
- EP-A1- 0 577 118
- FR-A1- 2 966 751
- FR-A1- 3 017 806

## Description

La présente invention se situe dans le domaine du reformage catalytique, et plus précisément dans le domaine des réacteurs à lit mobile qui permettent de mettre en oeuvre ledit procédé.

Les réacteurs catalytiques en lit mobile, c'est-à-dire en écoulement gravitaire lent et traversé par la charge sont bien connus de l'homme du métier. Néanmoins les unités industrielles de reformage catalytique qui utilisent plusieurs réacteurs de ce type disposés en série, avec réchauffage intermédiaire de la charge à l'entrée de chaque réacteur de la série, font toujours l'objet d'amélioration, notamment sur les conséquences des phénomènes de dilatation thermique au sein d'un réacteur.

En effet, le procédé de reformage catalytique nécessite des températures de fonctionnement aux alentours de 500°C. Ces fortes températures provoquent une dilatation des parois du réacteur en acier, laissant s'introduire une quantité plus ou moins importante de billes de catalyseur.

La particularité des réacteurs régénératifs réside justement dans le fait que le lit catalytique, composé de petites billes d'alumine poreux, circule en continu à travers les réacteurs à l'état de lit mobile selon un écoulement gravitaire lent.

Un arrêt brutal de l'unité stoppe la circulation du catalyseur et son accumulation à l'intérieur, a tendance à fortement solliciter les parois du réacteur en phase de refroidissement. Le catalyseur peut causer des dommages au réacteur et donc un coût économique non négligeable.

L'art antérieur le plus proche représenté par le document FR 3 017 806 décrit une zone de stockage temporaire du catalyseur capable de récupérer une certaine quantité de catalyseur lors d'un arrêt de la circulation, contrôlé ou non. Pour que cette zone de stockage temporaire fonctionne correctement, il faut que, lors du redémarrage du réacteur, elle puisse se vider et passer dans le lit qui est remis en circulation. L'objectif de la présente invention est de décrire une solution technologique à la réinsertion des billes dans le lit catalytique après un arrêt plus ou moins long de la circulation de catalyseur, que cet arrêt soit contrôlé ou non.

### EXAMEN DE L'ART ANTERIEUR

L'art antérieur dans le domaine des réacteurs en écoulement de type lit mobile, notamment le reformage catalytique des essences est très vaste.

Nous nous limitons ici aux documents qui décrivent des configurations typiques de réacteurs en lit mobile. Les brevets US 3,864,240, US 4,040,794, FR 2 160 269 et FR 2 946 660 décrivent différents types de réacteurs en lit mobile pouvant notamment être utilisés dans un procédé de reformage catalytique des essences. Dans ce type de procédé, le catalyseur circule entre les différents réacteurs de la section réactionnelle, le plus souvent 4 réacteurs, puis vers le régénérateur. Le catalyseur régénéré est ensuite renvoyé vers la section réactionnelle.

Selon d'autres variantes telles que décrites dans le document US 3,706,536, les différentes zones catalytiques sont empilées (on parle alors de « stacked reactor » dans la terminologie anglo saxonne) pour ne former qu'un seul réacteur comprenant les différentes sections réactionnelles entre lesquelles le catalyseur circule de façon gravitaire.

Le document FR 3 017 806 décrit un dispositif permettant de faire face à des interruptions de la circulation du catalyseur dans un réacteur de type lit mobile à courant croisé de la charge par rapport au catalyseur.

Le dispositif décrit dans le document cité consiste en des bavettes implantées à la partie inférieure des paniers enfermant le volume catalytique, ces bavettes pouvant se déplacer selon un axe vertical pour libérer un espace de stockage après l'interruption de la circulation du catalyseur, et permettre ensuite la remise en circulation du catalyseur stocké.

La présente invention peut être considérée comme une amélioration du dispositif décrit dans le document cité. Afin de faciliter le vidage de la zone de stockage temporaire (11), les deux systèmes décrits dans le document FR 3 017 806 sont modifiés par l'introduction d'un déflecteur qui apporte une amélioration à la vidange de la zone de stockage.

### DESCRIPTION SOMMAIRE DES FIGURES

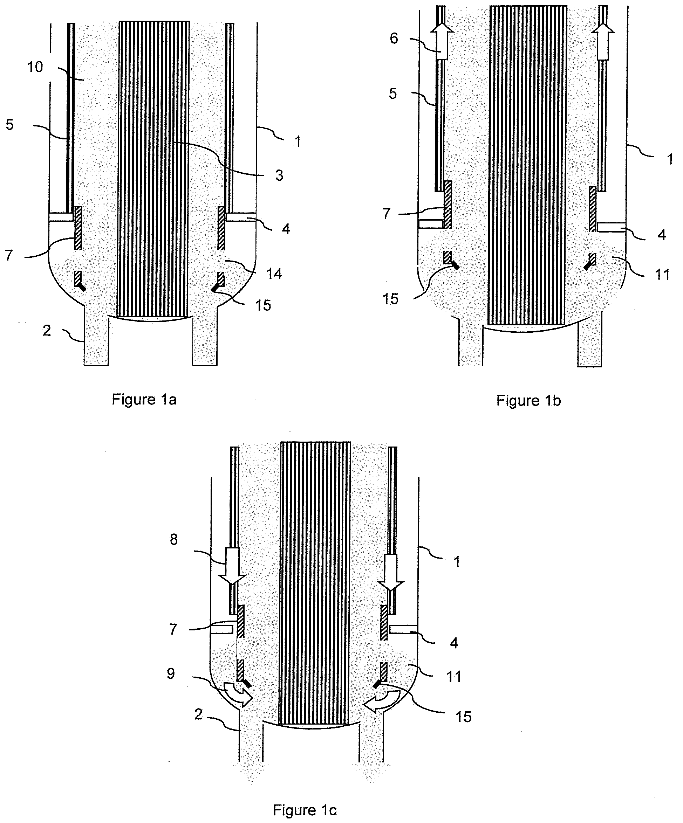

Les figures 1a, 1b et 1c décrivent le dispositif de l'invention dans sa version de base.

Des fenêtres (14) de forme généralement rectangulaire sont pratiquées le long de la circonférence sur la bavette (7) afin de permettre le remplissage de la zone (11).

De préférence ces fenêtres (14), peuvent être de forme rectangulaire, et sont pratiquées dans le bas de la bavette (7).
La figure 1a correspond au fonctionnement normal. Une certaine quantité de catalyseur s'étend au-delà du plan vertical défini par les paniers (5).
La figure 1b correspond à la situation d'un arrête de circulation du catalyseur. Lors d'un arrêt, le réacteur se refroidit et la circulation du catalyseur est interrompue. Le refroidissement du réacteur provoque alors la remontée du panier (5) et donc des fenêtres (14) de la bavette (7). Ceci permet au catalyseur de remplir un plus grand espace dans la zone de stockage (11).
La figure 1c correspond à la reprise du fonctionnement normal, c'est-à-dire avec la circulation du catalyseur dans les jambes de descente (2), le réacteur se réchauffe et le catalyseur circule de nouveau. La zone de stockage (11) se vide pour revenir à son état initial grâce à la présence du déflecteur (15) au bas de la bavette (7). Le déflecteur (15) est un plan ou une paroi courbe, incliné, soudé ou attaché de toute manière connue de l'homme du métier à la bavette (7), sur toute la circonférence ou une partie de celle-ci. Il peut aussi éventuellement être mobile autour de l'axe d'attache.

Une version simplifiée de ce système peut être une bavette (7) sans fenêtre où le catalyseur peut remplir une plus grande partie de la zone de stockage (11) lors du refroidissement par la partie ajourée en dessous du déflecteur.

Les figures 2a, 2b et 2c décrivent le dispositif selon l'invention dans sa variante où les bavettes (7) se déplacent dans des fourreaux fixes (12).

Dans ces figures, le fourreau (12) sensiblement vertical est maintenu soit par un moyen d'accroché (soudure, boulons ou autre) aux supports (4), soit en reposant simplement sur le fond du réacteur (1).

Des ouvertures (16) sont pratiquées à un niveau compris entre l'extrémité inférieure des paniers (5) et la partie supérieure de fourreau (12).

Des fenêtres (16), par exemple de forme rectangulaire, sont par ailleurs pratiquées dans la partie haute du fourreau (12) sur une partie de la circonférence ou sur la totalité.

Un déflecteur (15) est soudé, ou attaché de toute manière connue de l'homme du métier, à la partie inférieure du fourreau (12). Il peut avoir la forme d'un plan incliné ou d'une paroi courbe, sur toute la circonférence du fourreau (12) ou seulement une partie.

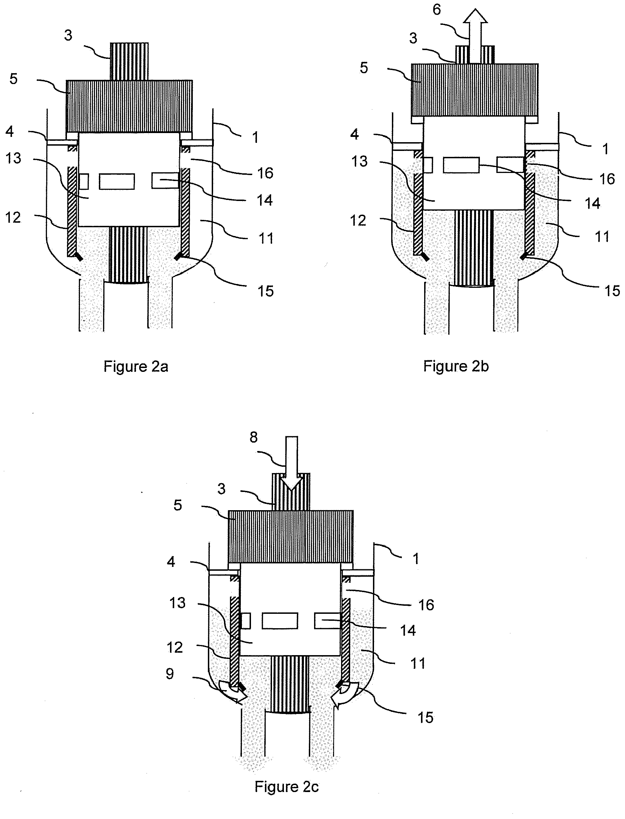

Lors de l'arrêt de la circulation représenté sur la figure 2b, les fourreaux (12) remontent et les fenêtres (14) se retrouvent en coïncidence avec les fenêtres (16) permettant ainsi le passage d'une certaine quantité de catalyseur dans la zone de stockage (11).

La figure 2c correspond à la reprise de circulation et à la vidange de la zone de stockage (11).

Le déflecteur (15) permet l'écoulement du catalyseur hors de la zone de stockage (11) lors de la remise en route du réacteur. Lors de cette remise en route, le réacteur reprend sa température de fonctionnement, et le catalyseur circule de nouveau. Progressivement, le panier (5) redescend refermant l'accès aux fenêtres (16), la zone de stockage (11) se vide complétement petit à petit, opération facilitée par la présence du déflecteur (15).

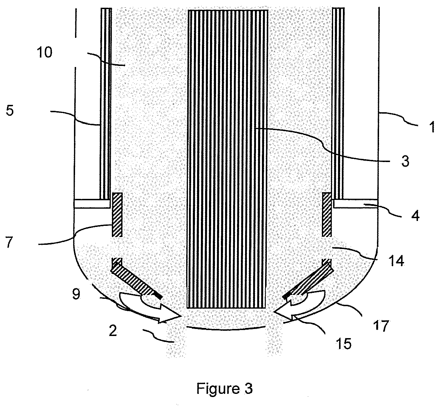

La figure 3 est une représentation du dispositif selon l'invention dans laquelle on montre une bavette (7) dont la partie terminale est inclinée par rapport à la verticale, cette bavette se terminant par le déflecteur (15) dont l'inclinaison est sensiblement la même que celle de la partie terminale de la bavette (7).

### DESCRIPTION SOMMAIRE DE L'INVENTION

L'invention consiste essentiellement à modifier la partie inférieure des réacteurs à lit mobile en ajoutant au panier mobile (5) contenant le catalyseur un dispositif de bavette mobile verticalement, situé dans le prolongement des parois verticales du panier (5) et muni à sa partie inférieure d'un déflecteur (15) formant un certain angle avec la verticale de manière à :
1) transférer une certaine quantité de catalyseur vers une zone de stockage temporaire (11), située en périphérie du réacteur dans la zone inférieure attenante aux parois,
2) réinjecter dans le lit, la partie du catalyseur transférée dans ladite zone de stockage lors d'un soulèvement du panier (5).

Cette zone de stockage temporaire (11) doit être positionnée de telle manière que la remise en circulation du catalyseur se situe à proximité des jambes de circulation (2) du réacteur.

Plus précisément la présente invention peut être décrite comme un réacteur catalytique mettant en oeuvre un catalyseur en lit mobile de forme annulaire, limité à sa périphérie extérieure par des parois verticales formant un panier cylindrique (5), et à sa périphérie interne par un collecteur central (3) également vertical, le catalyseur se trouvant en écoulement gravitaire lent dans l'espace compris entre le panier (5) et le collecteur central (3), et circulant vers le bas par l'intermédiaire de jambes de circulation (2) implantées sur le fond sensiblement hémisphérique du dit réacteur.

Le panier (5) est mobile selon un axe sensiblement vertical sur une distance de quelques centimètres pouvant aller jusqu'à 10 cm, ce panier (5) étant muni de bavettes (7) elles-mêmes sensiblement verticales, implantées à la partie inférieure du panier (5), dans le prolongement de la paroi verticale de ladite bavette (7).

Lors du fonctionnement du réacteur, ce dernier peut connaitre une interruption de la circulation du catalyseur, entrainant une baisse de température de l'enceinte réactionnelle et une compression du catalyseur qui fait subir aux parois et aux différents internes des contraintes mécaniques qui peuvent être très élevées.

La présente invention consiste à équiper le réacteur de moyens permettant à une certaine quantité de catalyseur de se déplacer vers une zone de stockage temporaire (11) pour faire baisser le niveau de ces contraintes mécaniques, puis dans un second temps, de vidanger la zone de stockage pour remettre en circulation le catalyseur temporairement stocké.

La présente invention peut donc se définir comme un réacteur catalytique mettant en oeuvre un catalyseur en lit mobile de forme annulaire, limité à sa périphérie extérieure par des parois formant un panier cylindrique (5), et à sa périphérie interne par un collecteur central (3), le catalyseur se trouvant en écoulement gravitaire lent dans l'espace compris entre le panier (5) et le collecteur central (3), et circulant vers le bas par l'intermédiaire de jambes de circulation (2) implantées sur le fond sensiblement hémisphérique du dit réacteur, lesdits paniers étant mobiles selon un axe sensiblement vertical sur une distance de quelques centimètres, pouvant aller jusqu'à 10 cm, ce panier (5) étant muni de bavettes (7) elles-mêmes sensiblement verticales, implantées sur la partie inférieure du panier (5), dans le prolongement de la paroi de ladite bavette (7).

Le réacteur selon la présente invention peut présenter des phases d'arrêt de la circulation du catalyseur, que celui-ci soit volontaire ou non.

Lors d'une interruption de la circulation du catalyseur, un espace ou zone de stockage (11) du catalyseur situé dans la partie inférieure du réacteur attenante à la paroi, et proche des jambes de descente (2) est libéré en remontant vers le haut l'ensemble du panier (5) et des bavettes solidaires (7).

La zone de stockage (11) du catalyseur est située dans la partie inférieure du réacteur attenante à la paroi, et proche des jambes de descentes (2). Cette zone de stockage est libérée en remontant vers le haut l'ensemble du panier (5) et des bavettes solidaires (7), la bavette (7) étant elle-même munie d'un déflecteur (15) qui lui est rigidement ou librement attaché, et qui forme avec la verticale un angle alpha compris entre 30 et 60°, préférentiellement compris entre 45 et 55°.

On peut aussi envisager une mobilité selon l'axe d'attache pouvant permettre un angle entre 0° et 60° avec la verticale.

Dans une variante préférée de l'invention, le déflecteur (15) est rigidement lié à la bavette (7) et la bavette (7) présente une portion terminale, elle-même inclinée par rapport à la verticale. De manière préférée, l'angle d'inclinaison de la portion terminale de la bavette (7) et du déflecteur (15) qui lui est attaché sont les mêmes. Cette variante est représentée figure 3.

Dans un second temps, le catalyseur est remis en circulation par gravité des que la circulation est rétablie, la zone de stockage (11) se vidant progressivement du catalyseur au moyen du déflecteur (15).

Dans la technologie usuelle des réacteurs catalytiques en lit mobile selon l'invention, le catalyseur est enfermé dans des paniers (5) de forme annulaire dont les parois sont constituées de grilles laissant passer la charge de l'extérieur vers l'intérieur du panier (5), puis les effluents réactionnels de l'intérieur du panier (5) vers le collecteur central (3). La charge circule donc à courant croisé par rapport au catalyseur en écoulement gravitaire lent, de l'ordre de quelques mètres par heure.

Dans une variante de la présente invention, les bavettes (7,) coulissent dans des fourreaux verticaux (12) fixes qui sont implantés dans le prolongement des parois verticales du panier (5) et sont munis de fenêtres (14) obstrués par les fourreaux (12) en circulation normale, lesdites fenêtres (14) étant libérées lors d'une élévation du panier (5) suite à une interruption de la circulation du catalyseur.

Une certaine quantité de catalyseur qu'on peut évaluer à un pourcentage de l'inventaire compris entre 0,2 et 5 % passe à travers les dites fenêtres (14) vers la zone de stockage (11) située dans la partie inférieure du réacteur entre le fourreau (12) et la paroi du fond hémisphérique du réacteur, et à une distance d supérieure à 30 cm de ladite paroi. Dans le cas où la hauteur entre le fond du réacteur (1) et les supports (4) n'est pas suffisante, cette partie du réacteur pourra être modifiée pour l'allonger d'une hauteur pouvant atteindre 1 mètre.

Généralement les fenêtres (14) ont une forme rectangulaire permettant une entrée régulière du catalyseur dans la zone de stockage (11). Elles peuvent également avoir une forme triangulaire, la pointe du triangle étant dirigée vers le haut, de manière à permettre une entrée progressive du catalyseur dans la zone de stockage (11). L'invention n'est pas liée à la forme des fenêtres (14) dont la forme pourra être ajustée par l'homme du métier en fonction des particularités du réacteur considéré.

L'invention concerne également tout procédé de raffinage ou de pétrochimie utilisant le réacteur selon l'une quelconque des caractéristiques précédentes. En particulier le réacteur selon l'invention peut être utilisé dans un procédé de reformage catalytique des essences ou encore dans un procédé d'hydrotraitement de résidus.

### DESCRIPTION DETAILLEE DE L'INVENTION

Dans ce paragraphe nous revenons plus en détail sur la situation d'un arrêt de circulation du catalyseur, le transfert d'une certaine quantité de ce catalyseur vers la zone de stockage temporaire, et la remise en circulation de cette quantité de catalyseur.

En fonctionnement normal, c'est-à-dire aux alentours de 500°C et à basse pression, les parois en acier d'un réacteur de reformage régénératif se dilatent. Associée à la circulation en continue du catalyseur, cette dilatation engendre l'introduction d'une plus grande quantité de catalyseur dans le réacteur par rapport à la quantité dite au repos. En cas d'arrêt de la circulation du catalyseur, le réacteur étant arrêté, les parois se refroidissent et se contractent entrainant de forts effets de compression du catalyseur à l'arrêt contre les parois du réacteur.

Les efforts engendrés au niveau des parois du réacteur sont tels que la partie haute du réacteur se soulève pouvant entrainer la destruction de certains internes, des déformations de la grille Johnson, des boulons de fixation, et également la casse de particules de catalyseur engendrant la création de fines particules à l'origine de pertes de charge supplémentaires.

La présente invention décrit un réacteur catalytique à lit mobile permettant de réaliser dans un premier temps le stockage d'une partie du catalyseur dans une zone de stockage temporaire, puis dans un second temps la remise en circulation du catalyseur stocké.

L'invention repose sur l'existence d'un panier mobile (5) qui est susceptible de remonter verticalement sur une distance de quelques cm, pouvant aller jusqu'à 10 cm, lors d'un arrêt de circulation du catalyseur, et sur l'existence d'un déflecteur (15) attaché aux parois (12) et formant un certain angle avec la verticale pour faciliter la vidange de la zone de stockage lors de la reprise de circulation du catalyseur.

Pour faciliter ladite remise en circulation du catalyseur, le déflecteur (15) est positionné à l'extrémité inférieure du fourreau (12) ou de la bavette (7), et à proximité des jambes de circulation (2) du réacteur. On entend par « à proximité » une position décalée vers les parois verticales du réacteur (1) par rapport à l'axe vertical des jambes de descente (2) inférieure à 10 cm et une distance « d » entre ledit déflecteur et le point le plus proche de la paroi du réacteur qui est supérieure ou égale à 10 cm, ceci pour éviter tout coincement du catalyseur lors de la vidange.

La longueur du déflecteur (15) doit être suffisante pour dévier le catalyseur qui descend dans le panier (5), sans être trop importante pour ne pas obstruer la fenêtre.

A titre d'exemple, une longueur comprise entre 10 diamètres de particules et la demi-ouverture peut convenir afin de ne pas réduire considérablement la fenêtre de vidage. L'angle du déflecteur doit être assez important pour dévier le catalyseur, sans l'être trop, pour ne pas l'arrêter.

Une valeur d'angle entre 30 et 60° avec la verticale doit permettre le vidage de la zone de stockage. Le déflecteur (15) peut être positionné dans la continuité de la paroi du fourreau (12) ou de la bavette (7), ou décalé sur un des deux côtés de la paroi pour faciliter sa fixation.

L'épaisseur du déflecteur doit être suffisante pour résister au poids du catalyseur qu'il supporte et pour ne pas trop se déformer lors des variations thermiques. Une épaisseur équivalente ou supérieure à la paroi du panier convient sans dépasser le double de l'épaisseur de la paroi du panier (5).

Enfin le déflecteur qui est positionné en bordure supérieure de la fenêtre de vidage doit être à proximité de l'aplomb d'une jambe de circulation (2) du réacteur.

Dans le cas où le panier extérieur (5) se situe loin de la jambe de circulation (2), celle-ci étant proche du collecteur central (3), il est préférable de modifier la forme de la zone de stockage (11) afin que la fenêtre de sortie soit bien positionnée. Pour cela, la forme de la partie basse de la bavette (7) ou du fourreau (12) peut être modifiée de manière à prolonger la bavette (7) (ou au fourreau (12) de la solution 2) en respectant la forme du bas du réacteur (1). Cette partie (17) peut être, soit fixée à la bavette (7) et solidaire dans ses mouvements, soit être mobile par rapport à la partie verticale de la bavette (7) ou du fourreau (12). Dans ce cas, la partie basse (17) doit être fixée au fond du réacteur. Un exemple de ce prolongement est donné sur la figure 3a pour la solution 1.

### EXEMPLE SELON L'INVENTION

L'exemple qui suit donne le dimensionnement de la zone de stockage et du déflecteur dans le cas d'un réacteur de reformage industriel de 14m de haut et de diamètre extérieur de 2.7 mètres. Les jambes de circulation (2) ont un diamètre de 7 cm.et le collecteur central un diamètre de 1.2 m.

Suite à une interruption de la circulation entrainant un refroidissement brusque du catalyseur, on évalue à 600kg la quantité de catalyseur à évacuer dans la zone de stockage temporaire, soit environ 2% de l'inventaire. Un test a été fait expérimentalement sur une tranche de réacteur en PMMA (Polyméthacrylate de méthyle) pour une dimension réelle de réacteur.

L'étude expérimentale a été faite sur une tranche de réacteur en PMMA dont l'épaisseur correspond à la dimension réelle de réacteur, et complétée par une simulation de type DEM (Discrète Element Method) au moyen du logiciel GRAINS développé par la demanderesse.

Ces tests ont conduit à une longueur du déflecteur (15) de 7cm pour une hauteur de fenêtre (14) de 200 mm.

L'angle d'inclinaison du déflecteur (15) par rapport à la verticale est de 53°.

Le déflecteur ainsi dimensionné permet :
1) l'introduction dans la zone de stockage temporaire d'une certaine quantité de catalyseur,
2) la vidange du catalyseur de la zone de stockage pour une vitesse de circulation du catalyseur dans le panier (5) équivalente à celle rencontrée en fonctionnement industriel, 0,1mm/s.
3) l'écoulement du catalyseur contenu dans la zone de stockage (11) suivant la flèche (9) se fait avec une vitesse du même ordre de grandeur que le catalyseur qui s'écoule dans l'annulaire entre le collecteur central (3) et le panier (5), ce qui permet de le réinsérer dans le lit catalytique d'une manière régulière. Le temps de vidange dépend donc de la hauteur de remplissage de la zone (11), il reste généralement inférieur à l'heure

## Revendications

1. Réacteur catalytique mettant en oeuvre un catalyseur en lit mobile de forme annulaire, limité à sa périphérie extérieure par des parois formant un panier cylindrique (5), et à sa périphérie interne par un collecteur central (3), le catalyseur se trouvant en écoulement gravitaire lent dans l'espace compris entre le panier (5) et le collecteur central (3), et circulant vers le bas par l'intermédiaire de jambes de circulation (2) implantées sur le fond sensiblement hémisphérique du dit réacteur, lesdits paniers étant mobiles selon un axe sensiblement vertical sur une distance de quelques centimètres, pouvant aller jusqu'à 10 cm, ce panier (5) étant muni de bavettes (7) elles-mêmes sensiblement verticales, implantées sur la partie inférieure du panier (5), dans le prolongement de la paroi de ladite bavette (7), réacteur dans lequel lors d'une interruption de la circulation du catalyseur, un espace de stockage (11) du catalyseur situé dans la partie inférieure du réacteur attenante à la paroi, et proche des jambes de descente (2) est libéré en remontant vers le haut l'ensemble du panier (5) et des bavettes solidaires (7), la bavette (7) étant elle-même munie d'un déflecteur (15) qui lui est rigidement ou librement attaché et formant avec la verticale un angle alpha compris entre 30 et 60°, préférentiellement compris entre 45 et 55°.

2. Réacteur catalytique selon la revendication 1, dans lequel le déflecteur (15) est rigidement lié à la bavette (7).

3. Réacteur catalytique selon la revendication 1, dans lequel le catalyseur est remis en circulation par gravité dès que la circulation est rétablie, la zone de stockage (11) se vidant progressivement du catalyseur au moyen du déflecteur (15).

4. Réacteur catalytique en lit mobile selon l'une des revendications 1 ou 3, dans lequel le catalyseur est enfermé dans des paniers (5) de forme annulaire dont les parois sont constituées de grilles laissant passer la charge de l'extérieur vers l'intérieur du panier (5), puis les effluents réactionnels de l'intérieur du panier (5) vers un collecteur central (3).

5. Réacteur catalytique en lit mobile selon l'une des revendication 1 à 4, dans lequel les bavettes (7) coulissent dans des fourreaux verticaux fixes (12) qui sont implantés dans le prolongement des parois verticales du panier (5) et sont munis de fenêtres (14) obstruées par les fourreaux (12) en circulation normale, lesdites fenêtres (14) étant libérées lors d'une élévation du panier (5) suite à une interruption de la circulation, permettant ainsi le passage du catalyseur à travers les dites fenêtres (14) vers la zone de stockage (11) située dans la partie inférieure du réacteur entre le fourreau (12) et la paroi du fond hémisphérique du réacteur, et à une distance d supérieure à 10 cm de ladite paroi.

6. Réacteur catalytique en lit mobile selon l'une des revendication 1 à 5, dans lesquels les bavettes (7) ou fourreaux verticaux (12) peuvent être prolongés par une paroi (15) permettant de rapprocher la sortie, par laquelle le catalyseur va sortir de la zone (11) suivant la flèche (9), de la verticale de la jambe de descente (2).

7. Réacteur catalytique en lit mobile selon l'une quelconque des revendications 1 à 6, dans lequel les fenêtres (14) ont une forme rectangulaire permettant une entrée régulière de catalyseur dans la zone de stockage (11).

8. Réacteur catalytique en lit mobile selon l'une quelconque des revendications 1 à 6, dans lequel les fenêtres (14) ont une forme triangulaire, la pointe du triangle étant dirigée vers le haut, de manière à permettre une entrée progressive du catalyseur dans la zone de stockage (11).

9. Procédé de raffinage ou de pétrochimie utilisant le réacteur selon l'une quelconque des revendications 1 à 8.

10. Procédé de reformage catalytique des essences utilisant le réacteur selon l'une quelconque des revendications 1 à 8.

11. Procédé d'hydrotraitement de résidus utilisant le réacteur selon l'une quelconque des revendications 1 à 8.

## Patentansprüche

1. Katalytischer Reaktor, der einen Katalysator im ringförmigen Fließbett einsetzt, der an seiner äußeren Peripherie durch Wände, die einen zylindrischen Korb (5) bilden, und an seiner inneren Peripherie durch einen zentralen Kollektor (3) begrenzt ist, wobei sich der schwerkraftbedingt langsam fließende Katalysator in dem Raum befindet, der zwischen dem Korb (5) und dem zentralen Kollektor (3) enthalten ist, und nach unten mit Hilfe von Zirkulationsbeinen (2) zirkuliert, die auf dem im Wesentlichen halbkugelförmigen Boden des Reaktors eingebaut sind, wobei die Körbe entlang einer im Wesentlichen vertikalen Achse über eine Distanz von einigen Zentimetern, die bis zu 10 cm reichen kann, beweglich sind, wobei dieser Korb (5) mit Klappen (7) versehen ist, die selbst im Wesentlichen vertikal sind, im unteren Teil des Korbs (5) in der Verlängerung der Wand der Klappe (7) eingebaut sind, wobei bei dem Reaktor bei einer Unterbrechung der Zirkulation des Katalysators ein Speicherraum (11) des Katalysators, der sich im unteren Teil des Reaktors, der an die Wand angrenzt, und nahe zu den Abstiegsbeinen (2) befindet, freigeben wird, wobei er die Einheit des Korbs (5) und der verbundenen Klappen (7) nach oben zieht, wobei die Klappe (7) selbst mit einem Abweiser (15) versehen ist, der mit ihm starr oder frei verbunden ist und mit der Vertikalen einen Winkel Alpha zwischen 30 und 60°, vorzugsweise zwischen 45 und 55°, bildet.

2. Katalytischer Reaktor nach Anspruch 1, bei dem der Abweiser (15) starr mit der Klappe (7) verbunden ist.

3. Katalytischer Reaktor nach Anspruch 1, wobei der Katalysator durch Schwerkraft wieder in Zirkulation versetzt wird, sobald die Zirkulation wieder hergestellt ist, wobei sich die Speicherzone (11) progressiv aus dem Katalysator mit Hilfe des Abweisers (15) leert.

4. Katalytischer Reaktor im Fließbett nach einem der Ansprüche 1 oder 3, wobei der Katalysator in Körbe (5) von ringförmiger Form eingeschlossen ist, deren Wände von Gittern gebildet sind, die die Charge von außen in das Innere des Korbs (5), dann die Reaktorabflüsse vom Inneren des Korbs (5) zu einem zentralen Kollektor (3) durchlassen.

5. Katalytischer Reaktor im Fließbett nach einem der Ansprüche 1 bis 4, bei dem die Klappen (7) in festen vertikalen Hülsen (12) gleiten, die in der Verlängerung der vertikalen Wände des Korbs (5) eingebaut und mit Fenstern (14) versehen sind, die durch die Hülsen (12) bei normaler Zirkulation verschlossen sind, wobei die Fenster (14) bei einer Anhebung des Korbs (5) nach einer Unterbrechung der Zirkulation freigegeben werden, wodurch der Durchgang des Katalysators durch die Fenster (14) zu der Speicherzone (11) möglich ist, die sich im unteren Teil des Reaktors zwischen der Hülse (12) und der Wand des halbkugelförmigen Bodens des Reaktors und in einem Abstand d von mehr als 10 cm zur Wand befindet.

6. Katalytischer Reaktor im Fließbett nach einem der Ansprüche 1 bis 5, bei dem die Klappen (7) oder vertikalen Hülsen (12) durch eine Wand (15) verlängert sein können, die es ermöglicht, den Ausgang, durch den der Katalysator aus der Zone (11) gemäß des Pfeils (9) austritt, der Vertikalen des Ablaufbeins (2) anzunähern.

7. Katalytischer Reaktor im Fließbett nach einem der Ansprüche 1 bis 6, bei dem die Fenster (14) eine rechteckige Form haben, die einen regelmäßigen Einlauf des Katalysators in die Speicherzone (11) ermöglicht.

8. Katalytischer Reaktor im Fließbett nach einem der Ansprüche 1 bis 6, bei dem die Fenster (14) eine dreieckige Form haben, wobei die Spitze des Dreiecks nach oben gerichtet ist, um einen progressiven Einlauf des Katalysators in die Speicherzone (11) zu ermöglichen.

9. Raffinerie- und Petrochemieverfahren, das den Reaktor nach einem der Ansprüche 1 bis 8 verwendet.

10. Katalytisches Reformierungsverfahren der Essenzen, das den Reaktor nach einem der Ansprüche 1 bis 8 verwendet.

11. Verfahren zur Hydrobehandlung von Reststoffen, das den Reaktor nach einem der Ansprüche 1 bis 8 verwendet.

## Claims

1. Catalytic reactor implementing a ring-shaped moving bed catalyst, limited at its outer periphery by walls forming a cylindrical basket (5), and at its internal periphery by a central collector (3), with the catalyst flowing slowly by force of gravity into the space between the basket (5) and the central collector (3), and circulating downwards through the intermediary of circulation legs (2) positioned on the substantially hemispherical base of said reactor, said baskets being movable along a substantially vertical axis over a distance of from a few centimetres to 10 cm, this basket (5) being equipped with flaps (7) themselves substantially vertical, positioned on the lower part of the basket (5), in the extension of the wall of said flap (7), in which reactor, when there is an interruption in the circulation of the catalyst, a catalyst storage space (11) situated in the lower part of the reactor adjoining the wall, and close to the dip legs (2), is released by moving the basket (5) and attached flaps (7) assembly upwards, the flap (7) itself being equipped with a deflector (15) rigidly or freely attached, and which forms an angle alpha with the vertical of between 30 and 60°, preferably of between 45 and 55°.

2. Catalytic reactor according to claim 1, wherein the deflector (15) is rigidly connected to the flap (7).

3. Catalytic reactor according to claim 1, wherein the catalyst is put back into circulation by gravity as soon as circulation has been re-established, with the storage area (11) progressively emptying itself of the catalyst by means of the deflector (15).

4. Moving bed catalytic reactor according to any one of claims 1 or 3, in which the catalyst is enclosed in ring-shaped baskets (5), the walls of which are comprised screens that allow the feed to pass from the outside to the inside of the basket (5), and then the reaction effluents from the inside of the basket (5) to the central collector (3).

5. Moving bed catalytic reactor according to any one of claims 1 to 4, wherein the flaps (7) slide in fixed vertical sleeves (12) that are located in the extension to the vertical walls of the basket (5) and are equipped with windows (14) obstructed by the sleeves (12) during normal circulation, said windows (14) being released when the basket (5) is raised following an interruption in the circulation of the catalyst, thereby allowing the passage of the catalyst through said windows (14) to the storage area (11) situated in the lower part of the reactor between the sleeve (12) and the wall of the hemispherical base of the reactor, and at a distance d of more than 10 cm from said wall.

6. Moving bed catalytic reactor according to any one of claims 1 to 5, wherein the flaps (7) or vertical sleeves (12) can be extended by a wall (15) allowing the outlet, via which the catalyst will leave the zone (11) according to the arrow (9), to be moved closes to the vertical of the dip leg (2).

7. Moving bed catalytic reactor according to any one of claims 1 to 6, wherein the windows (14) have a rectangular shape allowing steady entry of the catalyst into the storage area (11).

8. Moving bed catalytic reactor according to any one of claims 1 to 6, wherein the windows (14) have a triangular shape, with the tip of the triangle pointing upwards, to allow progressive entry of the catalyst into the storage area (11).

9. Petrochemical refining process using the reactor according to any one of claims 1 to 8.

10. Process for catalytic reforming of petrol using the reactor according to any one of claims 1 to 8.

11. Process for hydrotreatment of residues using the reactor according to any one of claims 1 to 8.
